(19) Europäisches Patentamt

European Patent Office

Office européen des brevets

(11) **EP 1 152 983 B1**

(12) **EUROPÄISCHE PATENTSCHRIFT**

(45) Veröffentlichungstag und Bekanntmachung des Hinweises auf die Patenterteilung:
**12.03.2003   Patentblatt 2003/11**

(51) Int Cl.⁷: **C02F 1/68**, G01N 33/18, G05D 21/02

(21) Anmeldenummer: **99962217.8**

(22) Anmeldetag: **04.12.1999**

(86) Internationale Anmeldenummer:
**PCT/EP99/09502**

(87) Internationale Veröffentlichungsnummer:
**WO 00/035814 (22.06.2000 Gazette 2000/25)**

(54) **STEUERUNG DER ABFLUT IN KÜHLKREISLÄUFEN**

CONTROLLING THE OUTFLOW IN COOLING CIRCUITS

REGULATION DE LA VIDANGE DANS DES CIRCUITS DE REFROIDISSEMENT

(84) Benannte Vertragsstaaten:
**AT BE CH CY DE DK ES FI FR GB GR IE IT LI LU MC NL PT SE**

(30) Priorität: **14.12.1998  DE 19857544**

(43) Veröffentlichungstag der Anmeldung:
**14.11.2001   Patentblatt 2001/46**

(73) Patentinhaber: **Henkel Kommanditgesellschaft auf Aktien
40589 Düsseldorf-Holthausen (DE)**

(72) Erfinder: **HATER, Wolfgang
D-41564 Kaarst (DE)**

(56) Entgegenhaltungen:
US-A- 3 918 469          US-A- 4 464 315
US-A- 4 648 043          US-A- 4 813 240
US-A- 5 057 229          US-A- 5 403 521
US-A- 5 855 791

• **PATENT ABSTRACTS OF JAPAN vol. 016, no. 118 (C-0922), 25. März 1992 (1992-03-25) & JP 03 288586 A (KURITA WATER IND LTD), 18. Dezember 1991 (1991-12-18)**

## Beschreibung

Die Erfindung betrifft das Gebiet offener Kühlkreisläufe, wie sie bei Kraftwerken und in Industriebetrieben anzutreffen sind. Bei diesen offenen Kühlkreisläufen wird der Kühleffekt vornehmlich dadurch erzielt, daß das zu kühlende Wasser in Kühltürmen teilweise verdampft, wodurch dem System Energie entzogen wird und sich das verbleibende Wasser abkühlt. Da gelöste Wasserinhaltsstoffe wie beispielsweise Salze hierbei jedoch nicht mit verdampfen, werden sie im verbliebenen Wasser angereichert. Da hierdurch die Tendenz zu Ausfällungen und zur Bildung von Belägen (Scale) sowie die Korrosivität des Wassers ansteigt, ist es zum einen erforderlich, durch Zugabe von Wasserbehandlungsprodukten (Konditionierungsmittel) dieser Tendenz entgegen zu wirken. Ab einer bestimmten Rate für das Aufkonzentrieren der gelösten Wasserinhaltsstoffe ("Eindickung") sind jedoch Kühlwasser-Konditionierungsmittel überfordert. Dies macht es dann zum anderen erforderlich, von Zeit zu Zeit einen Teil des aufkonzentrierten Kühlwassers abzufluten und durch frisches Wasser (Zusatzwasser) zu ergänzen. Da durch das Abfluten Wasserbehandlungsprodukte mit verloren gehen, ist es erforderlich, diese zur Konditionierung des Kühlwassers zu ergänzen. Unter Konditionierung wird hierbei vor allem die Verminderung der korrosiven Wirkung der Wasserphase und ihre Stabilisierung gegenüber der Bildung von Niederschlägen, der Ablagerung von Härtebildnern ("scale") und der Bildung biologischer Beläge verstanden.

Die für die Konditionierung von Kühlwasser eingesetzten Wasserbehandlungsprodukte haben unterschiedliche Aufgaben zu lösen und gehören daher in der Regel unterschiedlichen Stoffklassen an. Wasserbehandlungsprodukte umfassen als wesentliche Wirkstoffe Entschäumer, Härtestabilisatoren, Dispergatoren, Korrosionsinhibitoren und Biozide. Als Härtestabilisatoren sind beispielsweise bekannt: anorganische Polyphosphate, Phosphonsäuren, Aminomethylenphosphonsäuren, Phosphorsäureester, Phosphonocarbonsäuren sowie Polycarbonsäuren, beispielsweise vom Typ der teilverseiften Polyacrylamide oder der Polymere bzw. Copolymere von Acrylsäure und/oder Methacrylsäure. In neuerer Zeit wird verstärkt der Einsatz biologisch abbaubarer Polyaminocarbonsäuren wie beispielsweise Polyasparaginsäuren oder Asparaginsäure-haltige Polymere empfohlen. Polycarbonsäuren können auch die Funktion von Dispergiermitteln ("Dispergatoren") übernehmen, d.h. sie stabilisieren mikrodispers verteilte Feststoffpartikel gegen Sedimentation und Schlammbildung. Außer den bereits genannten teilhydrolysierten Polyacrylamiden und den Polycarbonsäuren bzw. Polyaminocarbonsäuren können als Dispergiermittel eingesetzt werden: Polystyrolsulfonate, Polyvinylsulfonate, quartäre Ammoniumverbindungen, unverseifte Polyacrylamide und Polyalkylenglycole. Als Mikrobizide können Stoffe eingesetzt werden, die auf Mikroorganismen giftig wirken, beispielsweise Isothiazolinderivate, Dibromnitrilopropionamid, Halogenalkylhydantoine, quartäre Ammonium- oder Phosphoniumverbindungen oder deren Derivate. Alternativ setzt man solche Stoffe ein, deren keimtötende Wirkung auf ihrem Oxidationsvermögen beruht. Beispiele solcher oxidativ wirkender Mikrobizide sind Ozon, Chlor, Brom, Chlordioxid, Hypochlorite, Hypobromite oder Wasserstoffperoxid. Einige der zuvor genannten Härtestabilisatoren haben auch eine korrosionsinhibierende Wirkung. Beispielsweise genannt seien: Phosphonsäuren wie beispielsweise 1-Hydroxyethan-1,1-diphosphonsäure oder Aminotrimethylenphosphonsäure, Phosphonocarbonsäuren wie beispielsweise 2-Phosphonobutan-1,2,4-tricarbonsäure. Polycarbonsäuren wie beispielsweise Copolymere der Acrylsäure und Methacrylsäure, Polyacrylate, Copolymere der Acrylsäure und des Acrylsäuremethylesters oder Polyaminosäuren können ebenfalls korrosionsinhibierend wirken. Anorganische Korrosionsinhibitoren sind beispielsweise Zinkionen, Molybdate, Chromate, Silicate, Carbonate, Ortho-, Pyro- und Polyphosphate, sowie Silicate.

Bei offenen Kühlkreisläufen wird das Umlaufwasser in Wärmetauschern oder Kondensatoren erwärmt und die zugeführte Wärme im Kühlturm durch Verdunstung eines Teiles des Umlaufwassers wieder entzogen. Dieser Prozeß führt zur Aufkonzentrierung der Wasserinhaltsstoffe. Um deren Konzentration im Kreislaufwasser zu begrenzen, wird ein Teil des Kreislaufwassers aus dem System abgeflutet. Dabei kann die Abflutung automatisch veranlaßt werden, wenn ein vorgewählter Wasserparameter (z.B. Leitfähigkeit, Dichte, Konzentration ausgewählter Wasserinhaltsstoffe) einen vorgegebenen Grenzwert überschreitet. Darüber hinaus gehen dem Kühlwasserkreislauf unbestimmte Mengen Kreislaufwasser zum Beispiel als Spritzwasserverluste, durch Leckagen und durch unkontrollierte Wasserentnahme verloren. Die Menge des abgefluteten und des verdunsteten Wassers sowie die Menge der unbestimmten Wasserverluste wird durch eine entsprechende Menge Frischwasser (Zulaufwasser, Zusatzwasser) ergänzt. Die Ergänzung kann über eine Messung des Füllstandes geregelt werden. Dabei muß gewährleistet bleiben, daß das Kreislaufwasser die korrekten Konzentrationen an Wasserbehandlungswirkstoffen beibehält. Dementsprechend muß die mit flüssigem Wasser aus dem Kreislaufsystem entfernte Menge an Wasserbehandlungswirkstoffen möglichst genau ergänzt werden.

Das übliche Verfahren, die Abflutung automatisch immer dann zu starten, wenn ein vorgegebener Wasserparameter einen vorgegebenen Grenzwert überschreitet, führt bei stark schwankender Qualität des Zusatzwassers zu Schwierigkeiten. Beispielsweise wird die Abflut häufig dann automatisch veranlaßt, wenn die elektrische Leitfähigkeit des Kreislaufwassers einen vorgegebenen Wert übersteigt. Dem liegt die Erfahrung zugrunde, daß die elektrische Leitfähigkeit mit der Konzentration von Salzen im Kreislaufwasser und damit letztlich mit der Eindickung korreliert ist. Schwankt jedoch die elektrische Leitfähigkeit des Zusatzwassers, ändert sich entsprechend die elektrische Leitfähigkeit im Kreislaufwasser, ohne daß dies einen bestimmten Grad an Eindickung bedeutet. Nimmt beispielsweise die elektrische Leitfähigkeit des Zusatzwassers ab, sinkt die elektrische Leitfähigkeit des Kreislaufwassers trotz gleichbleibender Eindickung bzw. steigt trotz zunehmender Eindickung nicht an. Dies kann zur Folge haben, daß das erwünschte Maß an Eindickung überschritten wird, die Konzentrationen der Konditionierungsmittel zur Behandlung des Wassers, z. B. gegen Ausfällungen und Belagsbildung oder Korrosion, nicht mehr ausreichen, und das Behandlungsziel nicht mehr erreicht wird.

Steigt andererseits die elektrische Leitfähigkeit des Zusatzwassers an, was beispielsweise durch einen geringfügigen Säureeintrag geschehen kann, so erhöht sich ebenfalls die elektrische Leitfähigkeit des Kreislaufwassers, ohne daß dies eine angestiegene Salzkonzentration bzw. eine erhöhte Eindickung bedeutet. In diesem Fall wird die Abflut früher gestartet, als es eigentlich erforderlich wäre. Hierdurch gehen dem Kühlkreislauf unnötig Wasserbehandlungsprodukte verloren, die wieder ersetzt werden müssen. Hierunter leidet die Wirtschaftlichkeit des Kühlkreislaufs.

Das Dokument US-A-4 464 315 beschreibt ein Verfahren zur Steuerung der Abflut in Kühlwasserkreisläufen mit Ergänzung des Wasserinhalts durch Zusatzwasser, insbesondere bei schwankender Qualität des Zusatzwassers; dabei wird Abflutung gestartet, wenn der gemessene Wert der Leitfähigkeit des Kühlwassers einen Maximalwert erreicht hat, der in Abhängigkeit der gemessenen Leitfähigkeit des Zusatzwassers und eines ermittelten Index-Faktors berechnet wird.

Daher besteht ein Bedarf nach einem verfeinertem Verfahren zur Steuerung der Abflut in Kühlkreisläufen, bei dem die schwankende Qualität des Zusatzwassers berücksichtigt werden kann.

Die Erfindung betrifft demnach ein Verfahren zur Steuerung der Abflut in Kühlkreisläufen mit Ergänzung des Wasserinhalts des Kühlkreislaufs durch Zusatzwasser, wobei man in Abhängigkeit von der Zeit einen Maximalwert $c_{max}(t)$ für eine zeitabhängige Bilanzierungsgröße $c(t)$ im Kreislaufwasser ermittelt, die ausgewählt ist aus physikalischen Parametern des Zusatzwassers oder aus Inhaltsstoffen des Zusatzwassers, und während eines Bilanzierungszeitraums der Dauer t Wasserverluste im Kühlkreislauf durch eine Zusatzwassermenge $V_{ZSW}(t)$ ergänzt, wobei man den Wert der Bilanzierungsgröße $c(t_0)$ im Kreislaufwasser zum Beginn des Bilanzierungszeitraums sowie den Wert der Bilanzierungsgröße $c_{ZSW}(t)$ im Zusatzwasser innerhalb des Bilanzierungszeitraums der Dauer t mißt und die Werte der Bilanzierungsgröße im Kreislaufwasser und im Zusatzwasser über Gleichung (1) miteinander verknüpft:

$$C_{max}(t) = [c(t_0)(V_0 - V_{ZSW}(t)/EZ) + V_{ZSW}(t)c_{ZSW}(t)]/ V_0 \qquad (1)$$

wobei $V_0$ das vorgegebene Volumen des Kühlsystems, das auch verändert werden kann, und EZ der vorzugebende Eindickungsfaktor darstellen,
die Abflutung startet, wenn der im Kreislaufwasser gemessene Wert der Bilanzierungsgröße den gemäß Gleichung (1) ermittelten Maximalwert $c_{max}(t)$ überschreitet, und die abgeflutete Kreislaufwassermenge durch Zusatzwasser ersetzt.

Dabei werden, wie auch bisher üblich, sowohl die Wasserverluste durch Abflut als auch durch Verdampfen durch eine solche Menge an Zusatzwasser ausgeglichen, daß der Soll-Füllstand des Kühlkreislaufs erreicht wird. Am einfachsten kann dies durch eine Schwimmerschaltung geregelt werden.

Zu welchem Zeitpunkt innerhalb eines Bilanzierungszeitraums der Dauer t man den Wert der Bilanzierungsgröße $c_{ZSW}(t)$ im Zusatzwasser mißt, ist prinzipiell ohne Belang. Dies kann beispielsweise zu Beginn des Bilanzierungszeitraums, zu einem beliebigen Zeitpunkt innerhalb des Bilanzierungszeitraums oder am Ende des Bilanzierungszeitraums geschehen. Man kann diesen Wert innerhalb des Bilanzierungszeitraums auch mehrmals messen und den Mittelwert der einzelnen Messungen für die weitere Berechnung verwenden.

Dabei kann die Bilanzierungsgröße $c(t)$ ausgewählt sein aus der elektrischen Leitfähigkeit, der Säurekapazität, der Gesamthärte und aus den Konzentrationen von Calcium-, Magnesium-, Kalium-, Natrium-, Chlorid-, Nitrat- und Sulfationen. Da die elektrische Leitfähigkeit in der Praxis am einfachsten zu bestimmen ist, beispielsweise durch geeignete Leitfähigkeitselektroden, ist es bevorzugt, als Bilanzierungsgröße die elektrische Leitfähigkeit zu wählen. Wählt man als Bilanzierungsgröße die Säurekapazität, die eine Aussage über die Pufferkapazität des Kreislaufwassers macht, kann diese beispielsweise ausgedrückt werden als $K_{S4,3}$-Wert. Ihre Bestimmung kann nach DIN 38409, Teil 7 erfolgen. Hierfür gilt allgemein: Die Säurekapazität in mmol/l wird bestimmt, indem man 100 ml Wasser mit einer 0,1 n Säurelösung bis zu einem vorgegebenen pH-Wert titriert. Wählt man als vorgegebenen pH-Wert 4,3, so spricht man von dem $K_{S4,3}$-Wert. Titriert man bis pH = 8,2, erhält man den $K_{S8,2}$-Wert. Der Verbrauch an ml 0,1 n Säure entspricht dem Zahlenwert der Säurekapazität.

Für die Bestimmung der Gesamthärte sowie der Konzentrationen der vorstehend genannten Ionen können Titrationsverfahren oder elektrochemische Verfahren unter Verwendung geeigneter ionensensitiver Elektroden eingesetzt werden.

Die Dauer eines Bilanzierungszeitraums t kann im Bereich von wenigen Minuten bis wenigen Tagen, beispielsweise im Bereich zwischen etwa 10 Minuten und etwa 48 Stunden liegen. Dabei wählt man die Dauer des Bilanzierungszeitraums vorzugsweise um so kürzer, je stärker der Wert $c_{zsw}(t)$ der ausgewählten Bilanzierungsgröße im Zusatzwasser schwankt. Beispielsweise kann die Zeitdauer des Bilanzierungszeitraums als umgekehrt proportional zum Betrag des Gradienten von $c_{zsw}(t)$ angesetzt werden. Hierdurch wird gewährleistet, daß der Kühlkreislauf trotz kurzfristiger Schwankungen der Qualität des Zusatzwassers stets mit angenähert gleicher Eindickung betrieben wird.

Weiterhin kann im erfindungsgemäßen Verfahren vorgesehen werden, daß man bei Vorliegen mehrerer Quellen für Zusatzwasser das rechnerische Produkt $V_{ZSW}(t)c_{ZSW}(t)$ in Gleichung (1) durch Summenbildung über die einzelnen rechnerischen Produkte $[V_{ZSW}(t)c_{ZSW}(t)]^i$ für die einzelnen Zusatzwasserquellen i ermittelt und die Volumina des Zusatzwassers $[V_{ZSW}]^i$ für die einzelnen Zusatzwasserquellen i zum Gesamtvolumen $V_{ZSW}$ des Zusatzwassers addiert. Dies berücksichtigt, daß das Zusatzwasser aus unterschiedlichen Quellen unterschiedliche Qualität aufweisen kann, wobei die Qualität der einzelnen Zusatzwasserquellen wiederum in unterschiedlichem Maße schwanken kann.

Wie im Stand der Technik üblich, wird auch im erfindungsgemäßen Verfahren das abgeflutete Wasser durch Zusatzwasser ersetzt. Dabei dosiert man während oder nach Ersatz des abgefluteten Wassers durch Zusatzwasser Produkte zur Wasserbehandlung (Konditionierungsmittel) in den Kühlkreislauf. Vorzugsweise dosiert man diese Produkte direkt in das Zusatzwasser. Es ist jedoch auch möglich, sie in das Kreislaufwasser einzudosieren. Welche Mengen an Konditionierungsmittel benötigt werden, kann nach Methoden gemäß dem Stand der Technik ermittelt werden. Im einfachsten Falle dosiert man die Produkte zur Wasserbehandlung mengenproportional zum Zusatzwasser. Dabei läßt sich die Zusatzwassermenge durch Wassermengenzähler wie beispielsweise Flügelräder oder Ovalradzähler oder induktiv bestimmen.

Weitere Verfahren zur Steuerung der Dosierung von Wasserbehandlungsprodukten sind im Stand der Technik bekannt. Hierbei können beispielsweise die Konzentrationen der einzelnen Wirkstoffe bestimmt werden, oder die Konzentrationen von Leitkomponenten, aus denen auf die Konzentrationen der weiteren Wirkstoffe geschlossen werden kann; oder man kann eine mittelbare Bestimmung der Wirkstoffkonzentration durchführen. Eine solche mittelbare Bestimmung kann beispielsweise dadurch erfolgen, daß dem Wasserbehandlungsprodukt eine als Tracer wirkende Substanz in einer bekannten Konzentration zugegeben wird, so daß aus der Bestimmung der Konzentration der Tracer-Substanz im Kreislaufwasser auf die Konzentrationen der Wirkstoffe der Wasserbehandlungsprodukte geschlossen werden kann. Als Tracer kommen beispielsweise Substanzen in Frage, die beim Bestrahlen mit elektromagnetischer Strahlung (z. B. sichtbares oder ultraviolettes Licht) eine Fluoreszenzstrahlung liefern, aus deren Intensität die Tracer-Konzentration ermittelt werden kann.

In einer Ausführungsform dosiert man die Produkte zur Wasserbehandlung proportional zu den Wasserverlusten in einem Kontrollintervall einer Zeitdauer $\Delta t$.

Die Wasserverluste im Kontrollintervall $V_{verlust}(\Delta t)$ können wie folgt bestimmt werden:

- näherungsweise durch die Abflutmenge $V_{ABF}(\Delta t)$
- durch die Zusatzwassermenge $V_{ZSW}(\Delta t)$ in Verbindung mit der Eindickung EZ gemäß $V_{verlust}(\Delta t) = V_{ZSW}(\Delta t) / EZ$
- durch das in der deutschen Patentanmeldung DE 198 47 275 beschriebene Verfahren:

Dieses Verfahren kann durchgeführt werden, indem man

a) zu einem vorgegebenen Zeitpunkt $t_0$ den Zahlenwert $P_0$ mindestens eines Parameters des Kreislaufwassers mißt, der ausgewählt ist aus den Konzentrationen ausgewählter Inhaltsstoffe des Kreislaufwassers, die über das Zulaufwasser in den Kühlkreislauf eingebracht werden, und den Werten ausgewählter physikalischer Parameter des Kreislaufwassers,

b) zu einem oder mehreren Zeitpunkten zwischen dem Zeitpunkt $t_0$ und einem später liegenden Zeitpunkt $t_1$ den oder die Zahtenwerte $P_Z$ des oder der im Teilschritt a) im Kreislaufwasser gemessenen Parameter im Zulaufwasser sowie die Menge $V_Z$ des zwischen den Zeitpunkten $t_0$ und $t_1$ zugelaufenen Zulaufwassers mißt,

c) zum Zeitpunkt $t_1$ den Zahlenwert $P_1$ des oder der im Teilschritt a) im Kreislaufwasser gemessenen Parameter im Kreislaufwasser emeut mißt und hieraus

d) den im Zeitintervall zwischen den Zeitpunkten $t_0$ und $t_1$ eingetretenen effektiven Verlust $V_{Verlust}$ an Kreislaufwasser berechnet nach einer der Gleichungen (Ia) oder (Ib):

$$V_{Verlust} = [(P_0 - P_1) \bullet V + P_Z \bullet V_z] / P_0 \qquad \text{(Ia)}$$

$$V_{Verlust} = [(P_1{}^* - P_1) \bullet V] / P_0 \qquad\qquad (Ib)$$

wobei V das Volumen des Kreislaufwassers zum Zeitpunkt $t_0$ bedeutet, $P_1{}^*$ den Wert darstellt, den $P_1$ theoretisch haben müßte, wenn keine Wasserverluste eingetreten wären und der sich berechnet gemäß Gleichung (Ic):

$$P_1{}^* = (P_0 \bullet V + P_z \bullet V_z)/V \qquad\qquad 5IC°$$

und alle Volumen- und Konzentrationsangaben auf die gleiche Maßeinheit für das Volumen bezogen werden.

Die Produkte zur Wasserbehandlung, die beim Ausgleich von Wasserverlusten durch Zusatzwasser in den Kühlkreislauf dosiert werden, können ausgewählt sein aus Bioziden, Korrosionsinhibitoren, Härtestabilisatoren, Dispergatoren, Säuren, Laugen und Entschäumem. Beispiele für Vertreter dieser Wirkstoffgruppen wurden einleitend aufgezählt. Dabei können diese Produkte zur Wasserbehandlung den Betrag der Bilanzierungsgröße c(t) im Kreislaufwasser beeinflussen. Vorzugsweise wählt man daher als Bilanzierungsgröße einen Parameter, der durch die zugesetzten Wasserbehandlungsprodukte nicht oder kaum verändert wird.

Jedoch ist es durchaus möglich, Parameter zu verwenden, die von den eingesetzten Wasserbehandlungsprodukten beeinflußt werden. In solchen Fällen ist es lediglich erforderlich, daß man die Änderung des Zahlenwerts des gemessenen Parameters, die auf den Zusatz der Wasserbehandlungsprodukte zurückgeht, aus der bekannten (beispielsweise gemessenen oder abgeschätzten) zugesetzten Menge dieser Produkte ermittelt und von den im Kreislaufwasser gemessenen Werten abzieht. Wenn also die Zugabe der Produkte zur Wasserbehandlung den Wert der Bilanzierungsgröße c(t) verändert, bringt man für die Größe dieser Veränderung in Gleichung (1) einen zusätzlichen Korrekturterm an. Dies kann folgendes bedeuten:

Vorzugsweise wählt man als Bilanzierungsgröße c(t) die elektrische Leitfähigkeit und/oder die Konzentration von Chlorid- und/oder Calciumionen. Die Konzentrationen können mit Ionen-selektiven Elektroden oder auch durch potentiometrische Titration bestimmt werden. Die Messung der elektrischen Leitfähigkeit ist besonders bevorzugt, da diese einfach mit einer Leitfähigkeitselektrode gemessen werden kann.

Dabei kann die Chloridkonzentration beispielsweise durch eine Biozidbehandlung in Form einer Chlorung oder durch Zugabe von Hypochlorit beeinflußt werden. Auch die Natriumkonzentration kann durch eine Biozidbehandlung (Zugabe von Natriumhypochlorit und/oder Natriumbromid) beeinflußt werden. In diesen Fällen zieht man den Anteil an der Gesamtkonzentration der Chlorid- und/oder Natriumionen im Kreislaufwasser, der auf die Zugabe bekannter Mengen der biozid wirkenden Salze zurückzuführen ist, von den gefundenen Werten ab.

Wird die Kontrolle über die Leitfähigkeit vorgenommen, kann der Einfluß der Säuredosierung zur pH-Kontrolle auf die Leitfähigkeit im Kreislaufwasser über die Messung der dosierten Mengen mit Hilfe der aus Tabellenwerken zu entnehmenden oder experimentell zu bestimmenden Äquivalenzleitfähigkeiten gemäß der Reaktionsgleichung

$$HCO_3{}^- + HX \rightarrow CO_2 + H_2O + X^-$$

$$\text{mit } X^- = Cl^-, NO_3{}^-, \tfrac{1}{2}SO_4{}^{2-} \text{ etc.}$$

bestimmt werden.

Dabei führt man die Einzelschritte des erfindungsgemäßen Verfahrens unabhängig von der gewählten Ausführungsform vorzugsweise programmgesteuert und automatisch durch, so daß sie in der Regel kein menschliches Eingreifen erfordern. Hierdurch wird die Betriebssicherheit des Kühlkreislaufs bei gleichzeitig reduziertem menschlichen Betreuungsaufwand erhöht.

Dies bedeutet, daß man für die einzelnen Meßparameter Meßeinrichtungen vorsieht, die ohne manuelles Eingreifen programmgesteuert betrieben werden können. Elektrochemische oder optische Meßverfahren sind hierfür besonders geeignet. Hierbei fallen die Meßergebnisse in Form elektrischer Signale an, die durch eine geeignete Auswerteeinheit weiter verarbeitet und in den Steuerrechner übertragen werden können. Insbesondere sieht man im Rahmen eines automatisiert ablaufenden Verfahrens vorzugsweise vor, daß einer oder mehrere der während des Ablaufs der einzelnen Verfahrensschritte erhaltenen Meßwerte und/oder eines oder mehrere hieraus abgeleitete Berechnungsergebnisse und/oder die ergriffenen Maßnahmen auf Datenträger gespeichert und/oder an einen vorgegebenen Ort übertragen werden. Die Speicherung auf Datenträger ermöglicht es, die nach dem erfindungsgemäßen Verfahren bestimmten Werte und die hieraus abgeleiteten Maßnahmen längere Zeiträume zu verfolgen und auszuwerten. Hierdurch wird den Anforderungen an eine moderne Qualitätssicherung Rechnung getragen. Durch die Übertragung der Daten bzw. der Berechnungsergebnisse an einen vorgegebenen Ort ist es möglich, sich auch aus der Ferne jederzeit einen Einblick in die Betriebsweise des Kühlkreislaufs und vorzugsweise auch über die Dosiermengen der Wasserbehandlungsprodukte zu verschaffen. Dabei kann der vorgegebene Ort innerhalb des Werkes liegen, zu dem der Kühlkreislauf gehört, und beispielsweise eine zentrale Leitwarte darstellen.

Jedoch kann der vorgegebene Ort des Festhaltens auf einem Datenträger und/oder der Ausgabe auf einer Ausgabeeinheit auch außerhalb des Werkes liegen, in dem der Kühlkreislauf betrieben wird. Ein solcher Ort, der beispielsweise beim Hersteller der eingesetzten Wasserbehandlungsprodukte liegen kann, wird in den Ansprüchen 10 bis 12 als "entfernter Ort" bezeichnet.

Demnach sieht man in einer bevorzugten Ausführungsform des erfindungsgemäßen Verfahrens vor, daß man die nach Gleichung (1) erhaltenen Werte von $c(t)$ und/oder die Meßwerte $c(t_0)$, $V_{zsw}(t)$ und $c_{zsw}(t)$ und/oder die Zeitpunkte der Abflutung und/oder die Größe der abgefluteten Wassermenge auf Datenträger aufzeichnet und/oder an einen entfernten Ort überträgt. Dabei kann die Übertragung der ermittelten Daten bzw. das Protokoll der ergriffenen Maßnahmen (Zeitpunkt und/oder Menge der Abflutung) kontinuierlich oder auf eine Femabfrage hin an den entfernten Ort übertragen werden.

Weiterhin sieht man im erfindungsgemäßen Verfahren vorzugsweise vor, daß man den vorzugebenenden Eindickungsfaktor EZ am Ort des Steuersystems für das erfindungsgemäße Verfahren oder von einem entfernten Ort aus verändern kann. Hierdurch ist es möglich, am Ort des Kühlkreislaufs oder auch von einem entfernten Ort aus die Eindickung an die Qualität des Zusatzwassers anzupassen.

Weiterhin sieht man vorzugsweise vor, daß man die Sollkonzentrationen von Produkten zur Wasserbehandlung in Abhängigkeit von dem gemäß Gleichung (1) erhaltenen Wert von $c_{max}(t)$ am Ort des Steuersystems für das erfindungsgemäße Verfahren oder von einem entfernten Ort aus verändert. Hierdurch läßt sich die Wirtschaftlichkeit des Kühlkreislaufs verbessern, da die Konzentrationen von Wasserbehandlungsprodukten wie beispielsweise von Dispergatoren und/oder von Härtestabilisatoren an die als Bilanzierungsgröße $c(t)$ gewählte Konzentration eines Wasserinhaltsstoffs oder an einen als Bilanzierungsgröße gewählten physikalischen Parameter angepaßt werden können. Die Konditionierung des Kühtkreislaufs wird hierdurch flexibler.

Vorzugsweise sieht man innerhalb des erfindungsgemäßen Verfahrens auch vor, daß die Abflut zu jedem beliebigen Zeitpunkt unabhängig von dem Wert der Bilanzierungsgröße am Ort des Kühlkreislaufs oder von einem entfernten Ort aus veranlaßt werden kann. Dies ermöglicht es, auf kritische Zustände des Kühlkreislaufs zu reagieren, die unter Umständen im erfindungsgemäßen Verfahrensablauf nicht erfaßt werden. Nach einer solchen außerplanmäßigen Abflut beginnt man mit einem neuen Bilanzierungszeitraum.

Das erfindungsgemäße Verfahren kann mit bekannten Verfahren zum Beeinflussen von Parametern im Kühlwasserkreislauf sowie zur Erfolgskontrolle der vorgenommenen Dosierung der Wasserbehandlungsprodukte gekoppelt werden. Beispielsweise kann im erfindungsgemäßen Verfahren zusätzlich vorgesehen werden, daß der pH-Wert im Kreislaufwasser kontinuierlich oder zu bestimmten Zeitpunkten gemessen wird. Hierfür kann beispielsweise eine pHsensitive Elektrode eingesetzt werden. Bei einer Abweichung vom Sollwert kann der pH-Wert automatisch durch Zudosieren von Säure oder Lauge korrigiert werden. Wird durch diese Korrekturmaßnahmen die Bilanzierungsgröße im Kühlwasserkreislauf verändert, so kann dieser Einfluß vom Steuersystem des Verfahrens automatisch berücksichtigt werden.

Weiterhin können im Stand der Technik bekannte Einrichtungen vorgesehen werden, die zusätzliche für die Kühlwasserbehandlung wichtige Parameter messen und aufzeichnen, auch wenn dies für die Ausführungsform des erfindungsgemäßen Verfahrens nicht erforderlich ist. Vorzugsweise können diese Werte von dem vorstehend beschriebenen entfernten Ort aus abgefragt werden. Stellt man hierbei Abweichungen vom erwünschten Betriebszustand fest, können dann von dem entfernten Ort aus die Sollkonzentrationen der Wasserbehandlungsprodukte so abgeändert werden, daß sich der Betriebszustand des Kühlkreislaufs in die erwünschte Richtung verschiebt. Beispielsweise können Einrichtungen vorgesehen werden, die Wasserparameter wie beispielsweise Konzentrationen von $Ca^{2+}$, $Mg^{2+}$, $Cl^-$, $SO_4^{2-}$, Silicat, ausgewählte Schwermetalle, beispielsweise Fe, Cu, Cr, Mn, Zn, Säurekapazität, z.B. bis zum pH-Wert 8,2 oder 4,3, Wassertrübung, Wassertemperatur, RedoxPotential, Korrosions- und Foulingrate bestimmen und aufzeichnen.

Weiterhin wird vorzugsweise vorgesehen, daß die Füllstände der Wasserbehandlungsprodukte in ihrem jeweiligen Vorratsbehälter überwacht werden. Bei Unterschreiten eines vorgegebenen Mindestfüllstandes in einem oder mehreren Vorratsbehältern kann eine Alarmmeidung in die Meßwarte und/oder an einen entfernten Ort abgegeben werden.

Das erfindungsgemäße Verfahren hat demnach den Vorteil, daß ohne Erhöhen des manuellen Betreuungsaufwandes, in der Regel sogar unter dessen Verminderung, die Betriebssicherheit des Kühlkreislaufs erhöht werden kann. Der Kühlkreislauf kann hierdurch wirtschaftlicher betrieben werden.

**Patentansprüche**

1. Verfahren zur Steuerung der Abflut in Kühikreisläufen mit Ergänzung des Wasserinhalts des Kühlkreislaufs durch Zusatzwasser, wobei man in Abhängigkeit von der Zeit einen Maximalwert $c_{max}(t)$ für eine zeitabhängige Bilanzierungsgröße $c(t)$ im Kreislaufwasser ermittelt, die ausgewählt ist aus physikalischen Parametern des Zusatzwassers oder aus Inhaltsstoffen des Zusatzwassers, und während eines Bilanzierungszeitraums der Dauer t Wasserverluste im Kühlkreislauf durch eine Zusatzwassermenge $V_{ZSW}(t)$ ergänzt, wobei man den Wert der Bilanzierungsgröße $c(t_0)$ im Kreislaufwasser zum Beginn des Bilanzierungszeitraums sowie den Wert der Bilanzierungsgröße $c_{ZSW}(t)$ im Zusatzwasser innerhalb des Bilanzierungszeitraums der Dauer t mißt und die Werte der Bilanzierungsgröße im Kreislaufwasser und im Zusatzwasser über Gleichung (1) miteinander verknüpft:

$$c_{max}(t) = [c(t_0)(V_0 - V_{ZSW}(t)/EZ) + V_{ZSW}(t)c_{ZSW}(t)]/V_0 \qquad (1)$$

   wobei $V_0$ das Volumen des Kühlsystems und EZ der vorzugebende Eindickungsfaktor darstellen, die Abflutung startet, wenn der im Kreislaufwasser gemessene Wert der Bilanzierungsgröße den gemäß Gleichung (1) ermittelten Maximalwert $c_{max}(t)$ überschreitet, und die abgeflutete Kreislaufwassermenge durch Zusatzwasser ersetzt.

2. Verfahren nach Anspruch 1, **dadurch gekennzeichnet, daß** die Bilanzierungsgröße $c(t)$ ausgewählt ist aus der elektrischen Leitfähigkeit, der Säurekapazität, der Gesamthärte und aus den Konzentrationen von Caicium-, Magnesium-, Kalium-, Natrium-, Chlorid-, Nitrat- und Sulfationen.

3. Verfahren nach einem oder beiden der Ansprüche 1 und 2, **dadurch gekennzeichnet, daß** die Dauer eines Bilanzierungszeitraums t im Bereich zwischen 10 Minuten und 48 Stunden liegt.

4. Verfahren nach Anspruch 3, **dadurch gekennzeichnet, daß** man die Dauer eines Bilanzierungszeitraumes um so kürzer wählt, desto stärker der Wert $c_{zsw}(t)$ der Bilanzierungsgröße schwankt.

5. Verfahren nach einem oder mehreren der Ansprüche 1 bis 4, **dadurch gekennzeichnet, daß** man bei Vorliegen mehrerer Quellen für Zusatzwasser das rechnerische Produkt $V_{zsw}(t)c_{zsw}(t)$ in Gleichung (1) durch Summenbildung über die einzelnen rechnerischen Produkte $[V_{ZSW}(t)c_{ZSW}(t)]^i$ für die einzelnen Zusatzwasserquellen i ermittelt und die Volumina des Zusatzwassers $[V_{ZSW}]^i$ für die einzelnen Zusatzwasserquellen i zum Gesamtvolumen $V_{ZSW}$ des Zusatzwassers addiert.

6. Verfahren nach einem oder mehreren der Ansprüche 1 bis 5, **dadurch gekennzeichnet, daß** man während oder nach Ersatz des abgefluteten Wassers durch Zusatzwasser Produkte zur Wasserbehandlung in den Kühlkreislauf dosiert

7. Verfahren nach Anspruch 6, **dadurch gekennzeichnet, daß** man die Produkte zur Wasserbehandlung mengenproportional zum Zusatzwasser dosiert

8. Verfahren nach einem oder beiden der Ansprüche 6 und 7, **dadurch gekennzeichnet, daß** die Produkte zur Wasserbehandlung ausgewählt sind aus Bioziden, Korrosionsinhibitoren, Härtestabilisatoren, Dispergatoren, Säuren, Laugen und Entschäumern.

9. Verfahren nach einem oder mehreren der Ansprüche 6 bis 8, **dadurch gekennzeichnet, daß** man, wenn die Zugabe der Produkte zur Wasserbehandlung den Wert der Bilanzierungsgröße $c(t)$ verändert, für die Größe dieser Veränderung in Gleichung (1) einen zusätzlichen Korrekturterm anbringt.

10. Verfahren nach einem oder mehreren der Ansprüche 1 bis 9, **dadurch gekennzeichnet, daß** man die nach Gleichung (1) erhaltenen Werte von $c(t)$ und/oder die Meßwerte $c(t_0)$, $V_{ZSW}(t)$ und $c_{ZSW}(t)$ und/oder die Zeitpunkte der Abflutung und/oder die Größe der abgefluteten Wassermenge auf Datenträger aufzeichnet und/oder an einen entfernten Ort überträgt.

11. Verfahren nach einem oder mehreren der Ansprüche 1 bis 10, **dadurch gekennzeichnet, daß** man den vorzugebenden Eindickungsfaktor EZ am Ort des Steuersystems für das erfindungsgemäße Verfahren oder von einem entfernten Ort aus verändert.

12. Verfahren nach einem oder mehreren der Ansprüche 1 bis 11, **dadurch gekennzeichnet, daß** man die Sollkonzentrationen von Produkten zur Wasserbehandlung in Abhängigkeit von dem gemäß Gleichung (1) erhaltenen Wert von $C_{max}(t)$ am Ort des Steuersystems für das erfindungsgemäße Verfahren oder von einem entfernten Ort aus verändert.

**Claims**

1. A process for controlling the discharge in cooling circuits with replenishment of the water content of the cooling circuit by means of make-up water, **characterised in that** a maximal value $c_{max}(t)$ is ascertained as a function of time for a time-dependent balancing variable $c(t)$ in the circuit water which is selected from physical parameters of the make-up water or from constituents of the make-up water, and, during a balancing period of duration t, losses of water in the cooling circuit are made up by an amount of make-up water $V_{ZSW}(t)$, the value of the balancing variable $c(t_0)$ in the circuit water at the start of the balancing period and also the value of the balancing variable $c_{ZSW}(t)$ in the make-up water being measured within the balancing period of duration t and the values of the balancing variable in the circuit water and in the make-up water being linked to one another via Equation (1):

$$c_{max}(t) = [c(t_0)(V_0 - V_{zsw}(t)/EZ) + V_{zsw}(t)c_{zsw}(t)]/V_0 \qquad (1)$$

wherein $V_0$ represents the volume of the cooling system and EZ represents the inspissation factor to be predetermined;
the discharge is started if the value of the balancing variable measured in the circuit water exceeds the maximal value $c_{max}(t)$ ascertained in accordance with Equation (1), and the discharged amount of circuit water is replaced by make-up water.

2. A process according to claim 1 wherein the balancing variable $c(t)$ is selected from the electrical conductivity, the acid capacity, the total hardness and from the concentrations of calcium, magnesium, potassium, sodium, chloride, nitrate and sulfate ions.

3. A process according to one or both of claims 1 and 2 wherein the duration of the balancing period t lies in the range between 10 minutes and 48 hours.

4. A process according to claim 3 wherein the duration of a balancing period is chosen to be shorter, the more strongly the value $c_{zsw}(t)$ of the balancing variable fluctuates.

5. A process according to one or more of claims 1 to 4 wherein, where several sources of make-up water are available, the arithmetical product $V_{zsw}(t)c_{zsw}(t)$ in Equation (1) is ascertained by summation over the individual arithmetical products $[V_{zsw}(t)c_{zsw}(t)]^i$ for the individual sources i of make-up water and the volumes of the make-up water $[V_{zsw}]^i$ for the individual sources i of make-up water are added to the total volume $V_{zsw}$ of the make-up water.

6. A process according to one or more of claims 1 to 5 wherein products for water treatment are metered into the cooling circuit during or after replacement of the discharged water by make-up water.

7. A process according to claim 6 wherein the products for water treatment are added in metered amounts to the make-up water in quantitatively proportional manner.

8. A process according to one or both of claims 6 and 7 wherein the products for water treatment are selected from biocides, corrosion inhibitors, hardness stabilisers, dispersants, acids, lyes and defoamers.

9. A process according to one or more of claims 6 to 8 wherein, if the addition of the products for water treatment changes the value of the balancing variable $c(t)$, an additional correcting term is applied in Equation (1) in respect of the magnitude of this change.

10. A process according to one or more of claims 1 to 9 wherein the values of $c(t)$ obtained in accordance with Equation (1) and/or the measured values $c(t_0)$, $V_{zsw}(t)$ and $c_{zsw}(t)$ and/or the times of the discharge and/or the magnitude of the discharged amount of water are recorded onto data carriers and/or transmitted to a remote location.

**11.** A process according to one or more of claims 1 to 10 wherein the inspissation factor EZ to be predetermined is changed at the location of the control system for the process or from a remote location.

**12.** A process according to one or more of claims 1 to 11 wherein the nominal concentrations of products for water treatment are changed, depending on the value of $c_{max}(t)$ obtained in accordance with Equation (1), at the location of the control system for the process or from a remote location.

**Revendications**

**1.** Procédé de commande de la vidange dans des circuits de refroidissement en complétant le volume d'eau du circuit de refroidissement par rajout d'eau,
selon lequel
en fonction du temps, on détermine une valeur maximale $c_{max}(t)$ pour une grandeur de bilan $c(t)$ dépendant du temps dans le circuit d'eau, grandeur sélectionnée parmi des paramètres physiques de l'eau à rajouter ou de composants de l'eau rajoutée et pendant la durée t de l'intervalle du bilan, on complète les pertes d'eau du circuit de refroidissement par une quantité d'eau rajoutée $V_{zsw}(t)$, on mesure la valeur de la grandeur de bilan $c(t_0)$ dans le circuit d'eau au début de la durée du bilan et la valeur de la grandeur de bilan $c_{zsw}(t)$ dans l'eau rajoutée pendant la durée de bilan t et on combine les valeurs des grandeurs de bilan dans le circuit d'eau et dans l'eau rajoutée suivant l'équation (1) :

$$c_{max}(t) = [c(t_0)[V_0 - V_{zsw}(t)/EZ) + V_{zsw}(t)c_{zsw}(t)]/V_0 \qquad (1)$$

dans laquelle :

$V_0$ est le volume du système de refroidissement,
EZ est le coefficient d'épaississement prédéterminé,

et on démarre la vidange si la valeur mesurée de la grandeur de bilan dans l'eau du circuit dépasse la valeur maximale $c_{max}(t)$ obtenue par l'équation (1) et on remplace l'eau vidangée du circuit par de l'eau rajoutée.

**2.** Procédé selon la revendication 1,
**caractérisé en ce qu'**
on sélectionne la grandeur de bilan $c(t)$ à partir des grandeurs suivantes : conductivité électrique, capacité acide, dureté globale, concentration d'ions, calcium, magnésium, potassium, sodium, chlorure, nitrate, sulfates.

**3.** Procédé selon l'une des revendications 1 et 2,
**caractérisé en ce que**
la durée d'un intervalle de bilan (t) est comprise entre 10 minutes et 48 heures.

**4.** Procédé selon la revendication 3.
**caractérisé en ce qu'**
on choisit la durée d'un intervalle de bilan d'autant plus courte que la valeur $c_{zsw}(t)$ de la grandeur de bilan varie fortement.

**5.** Procédé selon l'une ou plusieurs des revendications 1 à 4,
**caractérisé en ce qu'**
en cas de plusieurs sources d'eau à rajouter, on ajoute le produit de calcul $V_{zsw}(t)c_{zsw}(t)$ dans l'équation (1) en formant la somme des différents produits de calcul $[V_{zsw}(t)c_{zsw}(t)]^i$ pour les différentes sources d'eau (i) et les volumes d'eau complémentaires $[V_{zsw}]^i$ pour les différentes sources d'eau 1 et au volume total $V_{zsw}$ de l'eau rajoutée.

**6.** Procédé selon l'une ou plusieurs des revendications 1 à 5,

**caractérisé en ce que**
pendant ou après le remplacement de l'eau vidangée on dose les produits de traitement de l'eau dans le circuit de refroidissement.

7.  Procédé selon la revendication 6,
    **caractérisé en ce qu'**
    on dose les produits de traitement de l'eau suivant une quantité proportionnelle à l'eau rajoutée.

8.  Procédé selon l'une ou les deux revendications 6 et 7,
    **caractérisé en ce qu'**
    on sélectionne les produits de traitement de l'eau parmi les biocides, les inhibiteurs de corrosion, les stabilisateurs de dureté, les agents dispersants, les acides, les lessives et les agents démoussants.

9.  Procédé selon l'une ou plusieurs des revendications 6 à 8.
    **caractérisé en ce que**
    si l'addition des produits de traitement de l'eau modifie la valeur de la grandeur de bilan c(t) pour la grandeur de cette variation dans l'équation (1) on applique un terme de correction supplémentaire.

10. Procédé selon l'une ou plusieurs des revendications 1 à 9,
    **caractérisé en ce qu'**
    on enregistre les valeurs de c(t) et/ou les valeurs de mesure $c(t_0)$, $V_{zsw}(t)$, $c_{zsw}(t)$ et/ou les instants de vidange et/ou la quantité d'eau évacuée sur un support de données et/ou on les transmet à un endroit éloigné.

11. Procédé selon l'une ou plusieurs des revendications 1 à 10,
    **caractérisé en ce qu'**
    on modifie le coefficient d'épaississement EZ prédéterminé, à l'emplacement du système de commande du procédé selon l'invention ou à partir d'un endroit éloigné.

12. Procédé selon l'une ou plusieurs des revendications 1 à 11,
    **caractérisé en ce qu'**
    on modifie les concentrations de valeurs de consigne des produits de traitement de l'eau en fonction des valeurs obtenues selon l'équation (1) pour $c_{max}(t)$ à l'endroit du système de commande du procédé selon l'invention ou à partir d'un endroit éloigné.